# EUROPEAN PATENT APPLICATION

(11) **EP 3 248 761 A1**
(43) Date of publication of application: **29.11.2017**
(21) Application number: 16826686.4
(22) Date of filing: 25.03.2016
(51) Int. Cl.: B29C 67/00, B22F 3/105, B22F 3/16, B23K 26/342, B33Y 10/00, B33Y 30/00, B33Y 50/00

(54) **3D ADDITIVE MANUFACTURING DEVICE, CONTROL METHOD FOR 3D ADDITIVE MANUFACTURING DEVICE, AND CONTROL PROGRAM FOR 3D ADDITIVE MANUFACTURING DEVICE**

(71) Applicant: Technology Research Association for Future Additive Manufacturing, Tokyo 103-0027 (JP)
(72) Inventor: FUJITA Yoshihito, Ritto-shi Shiga 520-3080 (JP); NIITANI Haruhiko, Ritto-shi Shiga 520-3080 (JP)
(74) Representative: TBK
(86) International application number: PCT/JP2016/059763
(87) International publication number: WO 2017/163428

(57) **Abstract**

A high-precision three-dimensional laminated and shaped object is shaped. A three-dimensional laminating and shaping apparatus includes a material ejector that ejects a material of the three-dimensional laminated and shaped object onto a shaping table. The three-dimensional laminating and shaping apparatus also includes a light beam irradiator that irradiates the ejected material with a light beam. Furthermore, the three-dimensional laminating and shaping apparatus includes a light beam path controller that is arranged on a light beam path of the light beam, detects a material focus position on the shaping table, and controls the light beam path of the light beam based on the detected material focus position. The light beam path controller aligns the light beam focus position with respect to the material focus position.

## Description

### TECHNICAL FIELD

The present invention relates to a three-dimensional laminating and shaping apparatus, a control method of the three-dimensional laminating and shaping apparatus, and a control program of the three-dimensional laminating and shaping apparatus.

### BACKGROUND ART

In the above technical field, patent literature 1 discloses a technique of focusing a laser beam toward a target object.

### CITATION LIST

### PATENT LITERATURE

Patent literature 1: Japanese Patent Laid-Open No. 2015-178192

### SUMMARY OF THE INVENTION

### TECHNICAL PROBLEM

In the technique described in the above literature, however, it is impossible to cope with a change in material focus position at the time of nozzle replacement, and shape a high-precision three-dimensional laminated and shaped object.

The present invention enables to provide a technique of solving the above-described problem.

### SOLUTION TO PROBLEM

One aspect of the present invention provides a three-dimensional laminating and shaping apparatus comprising:
a material ejector that ejects a material of a three-dimensional laminated and shaped object onto a shaping table;
a light beam irradiator that irradiates the ejected material with a light beam; and
a light beam path controller that is arranged on a light beam path of the light beam, detects a material focus position on the shaping table, and controls the light beam path of the light beam based on the detected material focus position.

Another aspect of the present invention provides a control method of a three-dimensional laminating and shaping apparatus, comprising:
ejecting a material of a three-dimensional laminated and shaped object onto a shaping table;
irradiating the ejected material with a light beam; and
arranging a light beam path controller on a light beam path of the light beam, detecting a material focus position on the shaping table, and controlling the light beam path of the light beam based on the detected material focus position.

Still other aspect of the present invention provides a control program of a three-dimensional laminating and shaping apparatus, for causing a computer to execute a method, comprising:
ejecting a material of a three-dimensional laminated and shaped object onto a shaping table;
irradiating the ejected material with a light beam; and
arranging a light beam path controller on a light beam path of the light beam, detecting a material focus position on the shaping table, and controlling the light beam path of the light beam based on the detected material focus position.

### ADVANTAGEOUS EFFECTS OF INVENTION

According to the present invention, it is possible to shape a high-precision three-dimensional laminated and shaped object.

### BRIEF DESCRIPTION OF DRAWINGS

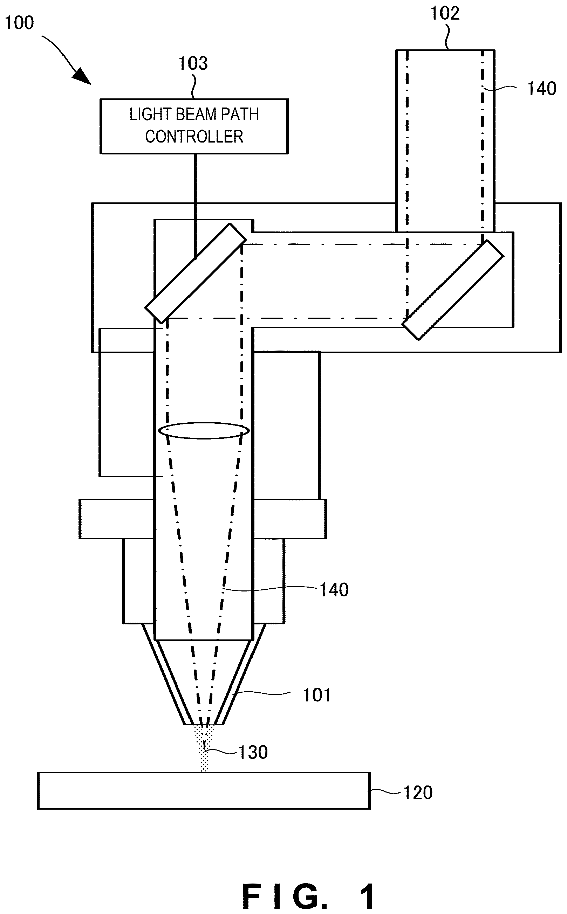

Fig. 1 is a view for schematically explaining the arrangement of a three-dimensional laminating and shaping apparatus according to the first embodiment of the present invention;

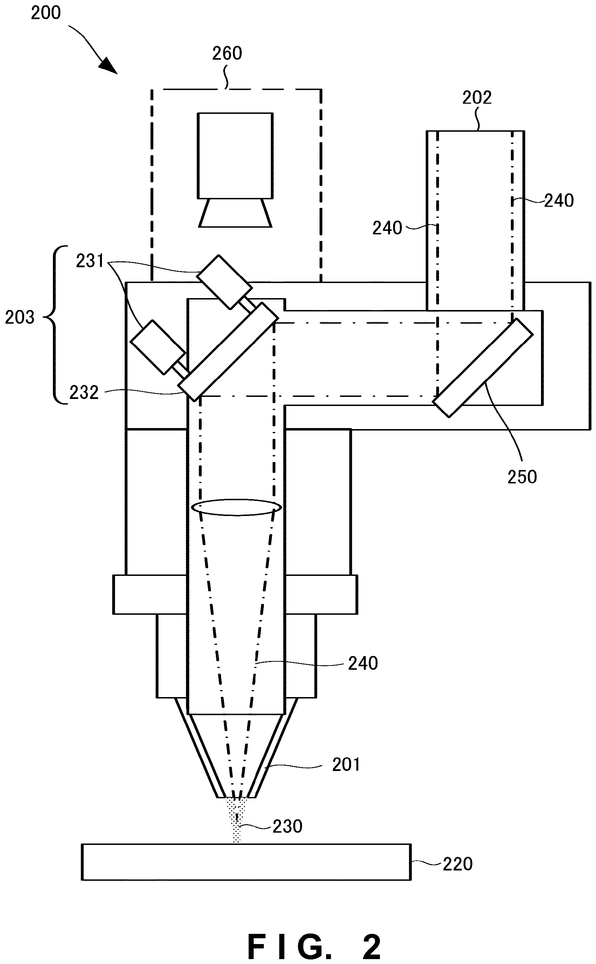

Fig. 2 is a view for schematically explaining the arrangement of a three-dimensional laminating and shaping apparatus according to the second embodiment of the present invention;

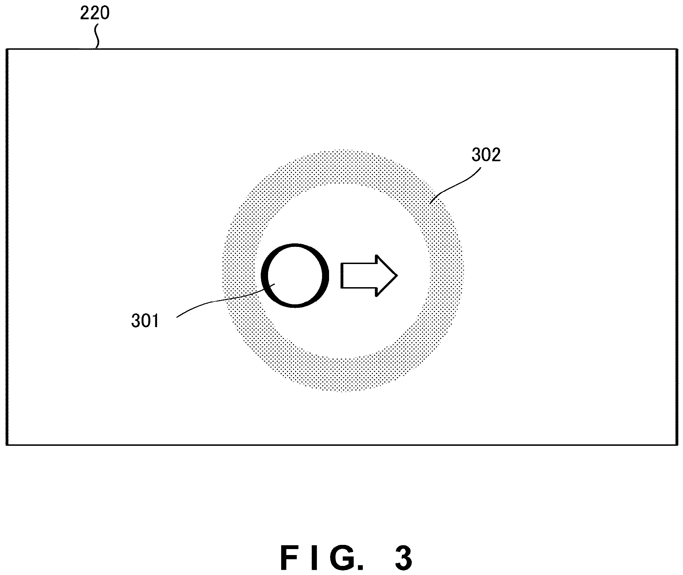

Fig. 3 is a plan view for explaining the relationship between a light beam focus position and a material ejection pattern by the three-dimensional laminating and shaping apparatus according to the second embodiment of the present invention;

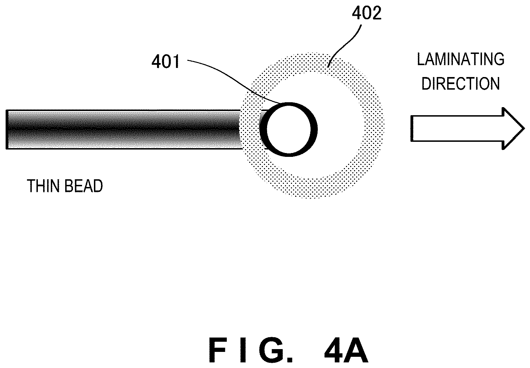

Fig. 4A is a plan view for explaining an example of a feature of a three-dimensional laminated and shaped object shaped based on the relationship between the light beam focus position and the material ejection pattern by the three-dimensional laminating and shaping apparatus according to the second embodiment of the present invention;

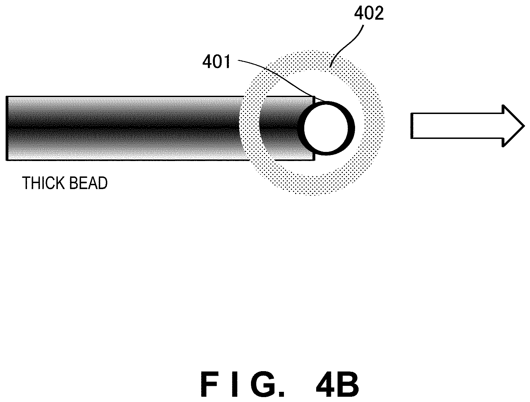

Fig. 4B is a plan view for explaining an example of a feature of a three-dimensional laminated and shaped object shaped based on the relationship between the light beam focus position and the material ejection pattern by the three-dimensional laminating and shaping apparatus according to the second embodiment of the present invention;

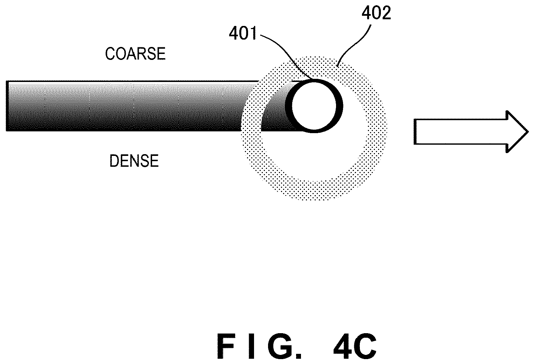

Fig. 4C is a plan view for explaining an example of a feature of a three-dimensional laminated and shaped object shaped based on the relationship between the light beam focus position and the material ejection pattern by the three-dimensional laminating and shaping apparatus according to the second embodiment of the present invention; and

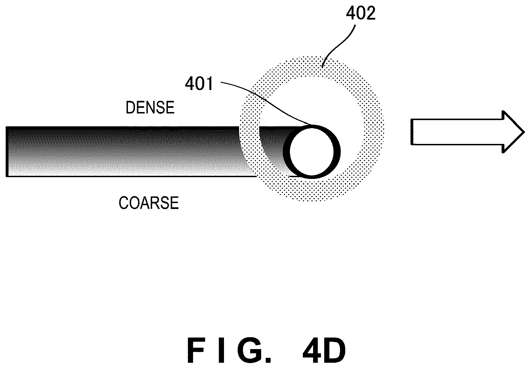

Fig. 4D is a plan view for explaining an example of a feature of a three-dimensional laminated and shaped object shaped based on the relationship between the light beam focus position and the material ejection pattern by the three-dimensional laminating and shaping apparatus according to the second embodiment of the present invention.

### DESCRIPTION OF THE EMBODIMENTS

Preferred embodiments of the present invention will now be described in detail with reference to the drawings. It should be noted that the relative arrangement of the components, the numerical expressions and numerical values set forth in these embodiments do not limit the scope of the present invention unless it is specifically stated otherwise.

### [First Embodiment]

A three-dimensional laminating and shaping apparatus 100 according to the first embodiment of the present invention will be described with reference to Fig. 1. The three-dimensional laminating and shaping apparatus 100 is an apparatus for shaping a three-dimensional laminated and shaped object by ejecting a material 130 onto a shaping table, and irradiating the ejected material 130 with a light beam 140.

As shown in Fig. 1, the three-dimensional laminating and shaping apparatus 100 includes a material ejector 101, a light beam irradiator 102, and a light beam path controller 103.

The material ejector 101 ejects the material 130 of the three-dimensional laminated and shaped object onto a shaping table 120 on which the three-dimensional laminated and shaped object is shaped. The light beam irradiator 102 irradiates the ejected material 130 with the light beam 140. The light beam path controller 103 is arranged on the light beam path of the light beam 140, and controls the light beam path of the light beam 140 based on the focus position of the light beam 140 and the focus position of the material 130.

According to this embodiment, it is possible to shape a high-precision three-dimensional laminated and shaped object.

### [Second Embodiment]

A three-dimensional laminating and shaping apparatus 200 according to the second embodiment of the present invention will be described with reference to Figs. 2 to 4. Fig. 2 is a view for schematically explaining the arrangement of the three-dimensional laminating and shaping apparatus 200 according to this embodiment.

### <Technical Premise>

A three-dimensional laminating and shaping apparatus according to the technical premise of the three-dimensional laminating and shaping apparatus 200 according to this embodiment replaces a laminating nozzle in accordance with a purpose, and uses it. For example, if it is desired to shape a three-dimensional laminated and shaped object with high efficiency, a laminating nozzle capable of ejecting a large amount of material such as a metal powder is attached to the three-dimensional laminating and shaping apparatus, and used. Alternatively, if it is desired to shape a three-dimensional laminated and shaped object at high precision, a laminating nozzle which ejects a small amount of material but can focus the material at high precision is used.

If a laminating nozzle is replaced, in order to adjust the focus position of a light beam such as a laser beam and the focus position of the material, the user performs alignment adjustment by manually moving the focus position of the light beam in the three-dimensional laminating and shaping apparatus according to the technical premise. This alignment adjustment is performed based on a video of the laminating nozzle captured by a CCD (Charge Coupled Device) camera attached to the three-dimensional laminating and shaping apparatus.

Upon end of the adjustment using the CCD camera, the user performs trial shaping. By actually shaping a three-dimensional laminated and shaped object with trial shaping, it is confirmed whether the focus position of the light beam and the focus position of the material do not shift from each other. In the trial shaping, a three-dimensional laminated and shaped object having a circular (cylindrical) shape is shaped. If the three-dimensional laminated and shaped object having a circular shape is shaped, a laminating width becomes narrow at a position of 90° from a reference point, and becomes wide at a position of 180° (the opposite side), and thus it is possible to know whether the light beam focus position and material focus position shift from each other.

That is, if the user of the three-dimensional laminating and shaping apparatus replaces the laminating nozzle, he/she needs to perform such adjustment before performing laminating and shaping, which requires heavy labor and long time.

Figs. 4A to 4D are plan views each for explaining an example of a features of a three-dimensional laminated and shaped object shaped based on the relationship between a light beam spot 401 and a material ejection pattern by the three-dimensional laminating and shaping apparatus 200 according to this embodiment.

Fig. 4A shows a case in which the light beam spot 401 shifts to the back side of a material ejection pattern 402 in a laminating direction (the moving direction of a light beam 240). In this case, since the amount of a material 230 entering the diameter of the light beam spot 401 of the light beam 240 becomes small, the amount of the material 230 to be used for shaping becomes small. In this case, therefore, a thin bead is shaped.

Fig. 4B shows a case in which the light beam spot 401 shifts to the front side of the material ejection pattern 402 in the laminating direction. In this case, since the amount of the material 230 entering the diameter of the light beam spot 401 of the light beam 240 becomes large, the amount of the material 230 to be used for shaping becomes large. In this case, therefore, a thick bead is shaped.

Figs. 4C and 4D each show a case in which the light beam spot 401 shifts to the upper side (or lower side) of the material ejection pattern 402 in the laminating direction. In this case, on the side on which the light beam spot 401 is positioned, the amount of the material 230 entering the diameter of the light beam spot 401 becomes small (large). In this case, therefore, a bead whose side on which the light beam spot 401 is positioned becomes coarse (dense) and whose opposite side of the side on which the light beam spot 401 is positioned becomes dense (coarse) is shaped.

### <Technique of Embodiment>

As shown in Fig. 2, the three-dimensional laminating and shaping apparatus 200 includes a material ejection nozzle 201, a light beam irradiator 202, and a light beam path controller 203.

The material ejection nozzle 201 ejects a metal powder or resin powder as the material 230 of the three-dimensional laminated and shaped object onto a shaping table 220. The material 230 ejected from the material ejection nozzle 201 is focused in a cone shape when viewed sideways, and is ejected onto the shaping table 220.

The light beam irradiator 202 causes the light beam 240 such as a laser beam to oscillate, and performs irradiation with it. The light beam 240 with which the light beam irradiator 202 performs irradiation is not limited to the laser beam, and may be, for example, an electron beam or a light beam of another wavelength.

The light beam path controller 203 controls the path of the light beam 240 to control the focus position of the light beam 240. The light beam path controller 203 includes actuators 231 and a mirror 232. At least three actuators 231 are attached to the mirror 232. The orientation (angle) of the mirror 232 is adjusted by driving the actuators 231, thereby moving the focus position (spot position) of the light beam 240 to a desired position.

Note that this embodiment has explained an example in which the actuators 231 are attached to the mirror 232 but the actuators 231 may be attached to a mirror 250. In this case, a combination of the actuators and the mirror 250 forms a light beam path controller. Alternatively, the actuators may be attached to both the mirrors 232 and 250. In this case, a combination of the actuators and the mirrors 232 and 250 forms a light beam path controller. A mechanism of changing the orientation of the mirror 232 is not limited to the actuators 231. A mechanism such as a motor or solenoid may be used as long as it can change the orientation of the mirror 232 (mirror 250).

Fig. 3 is a plan view for explaining the relationship between a light beam focus position and material ejection pattern by the three-dimensional laminating and shaping apparatus 200 according to this embodiment on a shaping surface. A light beam spot 301 indicates a position at which the light beam 240 such as a laser beam is focused, and represents the focus position of the light beam 240. A material ejection pattern 302 represents the ejection pattern of the material 230 ejected from the material ejection nozzle 201, and the material 230 ejected from the circular ejection port of the material ejection nozzle 201 is focused toward the shaping table 220 while gradually decreasing the radius of the circle.

The light beam path controller 203 drives the actuators 231 to change the orientation (angle) of the mirror 232, and moves the position of the light beam spot 301, thereby correcting the position of the light beam spot 301. For example, the light beam path controller 203 determines a shift between the center of the material ejection pattern 302 and that of the light beam spot 301, and moves the actuators 231 so as to decrease a shift amount. That is, the light beam path controller 203 analyzes an image of a camera 260, obtains a shift vector between the centers of the light beam spot 301 and material ejection pattern 302, and performs alignment by moving the actuators 231 according to the inverse vector of the shift vector.

Furthermore, the three-dimensional laminating and shaping apparatus 200 may divide the shaping surface into a mesh, and hold a table representing the relationship between the position of each grid point of the mesh and a driving amount by the actuators 231. Depending on a grid point at which the center of the material ejection pattern 302 exists, the light beam path controller 203 may align the light beam spot 301 with reference to the above-described table.

Note that an example in which a light beam optical system such as a laser beam is arranged on an axis different from that of an observation optical system for observing a molten pool or the like has been explained. However, the light beam optical system and the observation optical system may be coaxially arranged. If the light beam optical system and the observation optical system are coaxially arranged, a prism or the like may be used instead of the mirror. If the material ejection nozzle 201 and the shaping table 220 are sufficiently separated from each other, it is not necessary to perform observation through the material ejection nozzle 201, and it is possible to observe a molten pool or the like by externally arranging a CCD camera.

According to this embodiment, it is possible to readily and quickly align the focus position of the light beam and the focus position of the material. It is also possible to align the focus position of the light beam and the focus position of the material in real time. Furthermore, it is possible to automatically align the focus position of the light beam and the focus position of the material even if the material ejection nozzle is replaced. Since the focus position of the light beam and the focus position of the material can be aligned, it is possible to shape a high-precision three-dimensional laminated and shaped object.

### [Other Embodiments]

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

The present invention is applicable to a system including a plurality of devices or a single apparatus. The present invention is also applicable even when an information processing program for implementing the functions of the embodiments is supplied to the system or apparatus directly or from a remote site. Hence, the present invention also incorporates the program installed in a computer to implement the functions of the present invention by the computer, a medium storing the program, and a WWW (World Wide Web) server that causes a user to download the program. Especially, the present invention incorporates at least a non-transitory computer readable medium storing a program that causes a computer to execute processing steps included in the above-described embodiments.

## Claims

1. A three-dimensional laminating and shaping apparatus comprising:
a material ejector that ejects a material of a three-dimensional laminated and shaped object onto a shaping table;
a light beam irradiator that irradiates the ejected material with a light beam; and
a light beam path controller that is arranged on a light beam path of the light beam, detects a material focus position on the shaping table, and controls the light beam path of the light beam based on the detected material focus position.

2. The three-dimensional laminating and shaping apparatus according to claim 1, wherein said light beam path controller aligns the light beam focus position with respect to the material focus position.

3. The three-dimensional laminating and shaping apparatus according to claim 1 or 2, wherein said light beam path controller includes at least one mirror, and at least three drivers that adjust an angle of said mirror.

4. A control method of a three-dimensional laminating and shaping apparatus, comprising:
ejecting a material of a three-dimensional laminated and shaped object onto a shaping table;
irradiating the ejected material with a light beam; and
arranging a light beam path controller on a light beam path of the light beam, detecting a material focus position on the shaping table, and controlling the light beam path of the light beam based on the detected material focus position.

5. A control program of a three-dimensional laminating and shaping apparatus, for causing a computer to execute a method, comprising:
ejecting a material of a three-dimensional laminated and shaped object onto a shaping table;
irradiating the ejected material with a light beam; and
arranging a light beam path controller on a light beam path of the light beam, detecting a material focus position on the shaping table, and controlling the light beam path of the light beam based on the detected material focus position.
